(19) Europäisches Patentamt
European Patent Office
Office européen des brevets

(11) **EP 3 144 701 B1**

(12) **EUROPEAN PATENT SPECIFICATION**

(45) Date of publication and mention
of the grant of the patent:
**18.07.2018 Bulletin 2018/29**

(51) Int Cl.:
**G01S 13/32** *(2006.01)*    **G01S 13/90** *(2006.01)*

(21) Application number: **16165241.7**

(22) Date of filing: **14.04.2016**

(54) **METHOD AND DEVICE FOR GENERATING NON-LINEAR FREQUENCY MODULATION SIGNAL**

VERFAHREN UND VORRICHTUNG ZUR ERZEUGUNG EINES NICHTLINEAREN
FREQUENZMODULATIONSSIGNALS

PROCÉDÉ ET DISPOSITIF DE GÉNÉRATION DE SIGNAL DE MODULATION DE FRÉQUENCE
NON LINÉAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2015 CN 201510595956**

(43) Date of publication of application:
**22.03.2017 Bulletin 2017/12**

(73) Proprietor: **Institute of Electronics, Chinese Academy of Sciences Beijing 100190 (CN)**

(72) Inventors:
• **Deng, Yunkai**
  **100190 Beijing (CN)**
• **Wang, Wei**
  **100190 Beijing (CN)**
• **Wang, Yu**
  **100190 Beijing (CN)**
• **Zhang, Zhimin**
  **100190 Beijing (CN)**
• **Wang, Chunle**
  **100190 Beijing (CN)**

(74) Representative: **Gulde & Partner Patent- und Rechtsanwaltskanzlei mbB Wallstraße 58/59 10179 Berlin (DE)**

(56) References cited:
**US-B1- 7 880 672**

• **BOUKEFFA S ET AL: "Sidelobe reduction with nonlinear frequency modulated waveforms", SIGNAL PROCESSING AND ITS APPLICATIONS (CSPA), 2011 IEEE 7TH INTERNATIONAL COLLOQUIUM ON, IEEE, 4 March 2011 (2011-03-04), pages 399-403, XP031863323, DOI: 10.1109/CSPA.2011.5759910 ISBN: 978-1-61284-414-5**
• **VIZITIU IULIAN-CONSTANTIN ET AL: "Sidelobe reduction in pulse-compression radar using the stationary phase technique: An extended comparative study", 2014 INTERNATIONAL CONFERENCE ON OPTIMIZATION OF ELECTRICAL AND ELECTRONIC EQUIPMENT (OPTIM), IEEE, 22 May 2014 (2014-05-22), pages 898-901, XP032615805, DOI: 10.1109/OPTIM.2014.6850932 [retrieved on 2014-07-09]**
• **MARIUSZ ZYCH: "Suppression of GPR range sidelobes based on NLFM signal", RADAR SYMPOSIUM (IRS), 2012 13TH INTERNATIONAL, IEEE, 23 May 2012 (2012-05-23), pages 454-458, XP032454743, DOI: 10.1109/IRS.2012.6233364 ISBN: 978-1-4577-1838-0**

**Description**

**Technical Field**

The present disclosure relates to a technology for generating transmitted waveforms by a Synthetic Aperture Radar (SAR), and in particular to a method and device for generating a Non-Linear Frequency Modulation (NLFM) signal.

**Background**

At present, a Linear Frequency Modulation (LFM) signal has the transmitted waveform most commonly used in an SAR system, and a response function generated from matched filtering of such a waveform has a normalized Peak Side Lobe Ratio (PSLR) of -13 dB. Weighted windowing, adaptive filtering and other optimization algorithm are generally used to suppress the height of a side lobe, however, these methods may mismatch matched filters and reduce Signal to Noise Ratio (SNR).

Compared to LFM signals, Non-Linear Frequency Modulation (NLFM) signals have pulse compression results that may exhibit a very low PSLR, and do not have their output SNRs lost during pulse compression. Some experiments show that NLFM signals can avoid an SNR loss of 1 to 2 dB, which namely saves 25% of the transmission power of an antenna, thus improving performance of a radar system that suffers from energy shortage when NLFM signals are used as the transmitted waveform.

BOUKEFFA S ET AL: "Sidelobe reduction with nonlinear frequency modulated waveforms" (Signal Processing and Its Appications (CSPA), 2011 IEEE 7th International Colloquium On, IEEE, 4 March 2011, pages 399-403, XP0) discloses that pulse compression with Nonlinear Frequency Modulation (NLFM) is a promising way for achieving fine resolution, good SNR, low cost, and good interference mitigation, and a design method for nonlinear FM signals based on principle of Stationary phase is outlined. Ten popular methods of NLFM and LFM are investigated and their performance are assessed by measuring, sidelobe level reducing, Doppler sensitivity, and loss in SNR caused by Doppler shift for each method, all using medium pulse compression ratios. The simulation results are used to define the most suitable waveform for Sidelobe mitigation for SAR imaging system.

VIZITIU IULIAN-CONSTANTIN ET AL: "Sidelobe reduction in pulse-compression radar using the stationary phase technique: An extended comparative study" (2014 International Conference on Optimization of Electrical and Electronic Equipment (OPTIM), IEEE, 22 May 2014, pages 898-901, XP032615805) discloses that according to pulse-compression radar theory, the sidelobe reduction using nonlinear frequency modulation (NLFM) signal processing represents a major and present research direction. Although in literature a lot of techniques to design efficient NLFM waveforms are indicated, one of the most important methods as application area is focused on stationary phase technique (SPT) use. Consequently, the main objective of this paper is to make an extended comparative study as sidelobe suppression among some very promising NLFM laws achieved by applying of a proper SPT synthesis algorithm. In addition, some aspects related to the suitable choice of the parameters involved in the synthesis process of NLFM signals are also indicated.

MARIUSZ ZYCH: "Suppression of GPR range sidelobes based on NLFM signal" (Radar Symposium (IRS), 2012 13th International, IEEE, 23 May 2012, pages 454-458, XP032454743) presents simulation results of ground penetrating radar. The GPR transmits non-linear frequency modulated pulses. NLFM signal applied to GPR enables to achieve better range resolution then traditional LFM pulse radar. In order to generate non-linear modulating function, Parseval's relation has been used. The aim of the experiment is to test ability of the SAR system with NLFM pulse signal to obtain fully focused image of underground targets.

US7880672B1 (Doerry Armin W, 1 February 2011) discloses that a phase component of a nonlinear frequency modulated (NLFM) chirp radar pulse can be produced by performing digital integration operations over a time interval defined by the pulse width. Each digital integration operation includes applying to a respectively corresponding input parameter value a respectively corresponding number of instances of digital integration.

However, with regard to how to obtain accurate NLFM signals according to required PSLRs, no specific solutions have been proposed, and it is still a problem that has yet to be solved.

**Summary**

In view of the above, embodiments of the present disclosure are intended to provide a method and device for generating an NLFM signal, which are capable of obtaining an accurate NLFM signal according to a required PSLR.

To this end, the technical solutions of the present disclosure are implemented as follows. The invention is defined by the appended claims. An example of the present disclosure provides a method for generating an NLFM signal, including:

a power spectral density is determined according to a required Peak Side Lobe Ratio (PSLR);
a frequency-time structures function of a signal is determined according to the power spectral density;
a time-frequency structures function of the signal is determined according to the frequency-time structures function of the signal;
the time-frequency structures function of the signal is integrated to obtain a phase, and discrete values of the signal are calculated using the obtained phase; and
a series of digital signals are generated according to the discrete values of the signal, and digital-to-analog conversion is performed on the series of digital signals to obtain a NLFM signal.

In the solution, determining the power spectral density according to the required PSLR may include:
a window function corresponding to the required PSLR is acquired according to the required PSLR, and the window function is taken as the power spectral density.

In the solution, determining the frequency-time structures function of the signal according to the power spectral density may include:

a product of the power spectral density and a chirp rate is calculated according to a known pulse width to obtain a coefficient of inverse proportionality; and
the coefficient of inverse proportionality is substituted into the reciprocal of the chirp rate and integration is performed to determine the frequency-time structures function of the signal.

In the solution, determining the time-frequency structures function of the signal according to the frequency-time structures function of the signal may include:

discrete values of the frequency-time structures function of the signal are calculated according to the frequency-time structures function of the signal, the discrete values of the frequency-time structures function of the signal including an independent variable and a dependent variable; and
the independent variable and the dependent variable are reversed, and polynomial coefficients are acquired by fitting to determine the time-frequency structures function of the signal.

In the solution, integrating the time-frequency structures function of the signal to obtain the phase and calculating discrete values of the signal using the obtained phase, and generating the series of digital signals according to the discrete values of the signal and performing digital-to-analog conversion on the series of digital signals to obtain the NLFM signal may include:

an expression of the time-frequency structures function of the signal is established according to the number of polynomial coefficients and the expression of the time-frequency structures function is integrated;
the polynomial coefficients is substituted into a result of the integration of the expression of the time-frequency structures function of the signal to obtain the phase of the signal which serves as a phase value of the signal at a waveform sampling point;
the phase value is substituted into an expression of the signal to obtain the discrete values of the signal; and
the series of digital signals are generated according to the discrete values of the signal, and digital-to-analog conversion is performed on the series of digital signals to obtain the NLFM signal.

An example of the present disclosure further provides a device for generating an NLFM signal, including a first determination module, a second determination module, a third determination module, an arithmetic module, a conversion module, in which:

the first determination module is configured to determine a power spectral density according to a required PSLR;
the second determination module is configured to determine a frequency-time structures function of a signal according to the power spectral density;
the third determination module is configured to determine a time-frequency structures function of the signal according to the frequency-time structures function of the signal;
the arithmetic module is configured to integrate the time-frequency structures function of the signal to obtain a phase, and calculate discrete values of the signal using the obtained phase; and
the conversion module is configured to generate a series of digital signals according to the discrete values of the signal, and perform digital-to-analog conversion on the series of digital signals to obtain a NLFM signal.

In the solution, the first determination module may be specifically configured to acquire a window function corresponding to the required PSLR according to the required PSLR, and take the window function as the power spectral density.

In the solution, the second determination module may be specifically configured to:

calculate, according to a known pulse width, a product of the power spectral density and a chirp rate to obtain a coefficient of inverse proportionality, and substitute the coefficient of inverse proportionality into the reciprocal of the chirp rate and perform integration to determine the frequency-time structures function of the signal.

In the solution, the third determination module may be specifically configured to:

discrete values of the frequency-time structures function of the signal are calculated according to the frequency-time structures function of the signal, the discrete values of the frequency-time structures function of the signal including an independent variable and a dependent variable; and

the independent variable and the dependent variable are reversed, and polynomial coefficients are acquired by fitting to determine the time-frequency structures function of the signal.

In the solution, the arithmetic module may be specifically configured to:

establish an expression of time-frequency structures function of the signal according to the number of the polynomial coefficients and integrate the expression of the time-frequency structures function;

substitute the polynomial coefficients into a result of the integration of the expression of the time-frequency structures function of the signal to obtain the phase of the signal which serves as a phase value of the signal at a waveform sampling point;

substitute the phase value into an expression of the signal to obtain the discrete values of the signal; and generate the series of digital signals according to the discrete values of the signal, and perform digital-to-analog conversion on the series of digital signals to obtain the NLFM signal.

In the method and device for generating an NLFM signal according to the embodiments of the present disclosure, a power spectral density is determined according to a required Peak Side Lobe Ratio (PSLR); a frequency-time structures function of the signal is determined according to the power spectral density; a time-frequency structures function of the signal is determined according to the frequency-time structures function of the signal; the time-frequency structures function of the signal is integrated to obtain a phase, and discrete values of the signal are calculated using the obtained phase; and a series of digital signals are generated according to the discrete values of the signal, and digital-to-analog conversion is performed on the series of digital signals to obtain the NLFM signal. In this way, it is possible to acquire an NLFM signal required by SAR transmission, and compared to an LFM signal, it is possible to save transmission power of an antenna and reduce SNR loss, thereby improving system performance.

**Brief description of the drawings**

Fig. 1 is a flow chart of a method for generating an NLFM signal according to an embodiment of the present disclosure;
Fig. 2 is a schematic diagram showing a spectrum of a linear frequency modulation signal and a spectrum of a signal weighted by Taylor window according to an embodiment of the present disclosure;
Fig. 3 is a schematic diagram showing autocorrelation results of a linear frequency modulation signal and of a signal weighted by Taylor window according to an embodiment of the present disclosure;
Fig. 4 is a schematic diagram showing frequency-time structures of a signal according to an embodiment of the present disclosure;
Fig. 5 is a schematic diagram showing time-frequency structures of a signal acquired by $22^{nd}$-order polynomial fitting according to an embodiment of the present disclosure;
Fig. 6 is a schematic diagram showing phase values of a signal according to an embodiment of the present disclosure;
Fig. 7 is a schematic diagram showing real parts of a signal according to an embodiment of the present disclosure;
Fig. 8 is a schematic diagram showing autocorrelation results of a signal according to an embodiment of the present disclosure; and
Fig. 9 is a schematic structural diagram of a device for generating an NLFM signal according to an embodiment of the present disclosure.

**Detailed Description**

In embodiments of the present disclosure, a power spectral density is determined according to a required PSLR;

a frequency-time structures function of a signal is determined according to the power spectral density; a time-frequency structures function of the signal is determined according to the frequency-time structures function of the signal; the time-frequency structures function of the signal is integrated to obtain a phase, and discrete values of the signal are calculated using the obtained phase; and a series of digital signals are generated according to the discrete values of the signal, and digital-to-analog conversion is performed on the series of digital signals to obtain the NLFM signal.

The present disclosure will be further elaborated below in connection to embodiments.

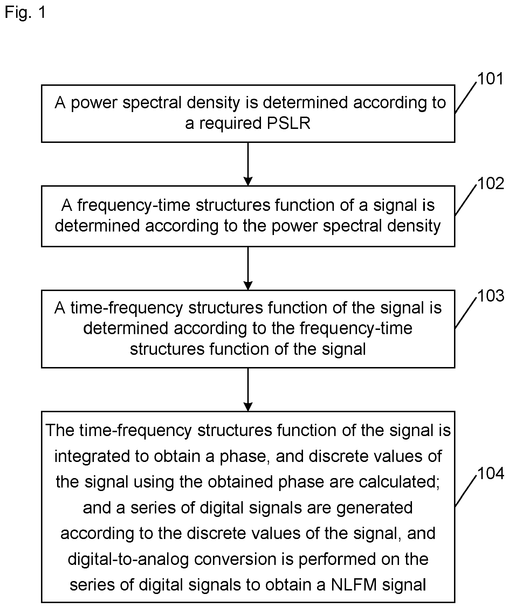

A method for generating an NLFM signal according to an embodiment of the present disclosure, as shown in Fig. 1, includes steps as follows.

Step 101, a power spectral density is determined according to a required PSLR;

specifically, a window function corresponding to the required PSLR is acquired according to the required PSLR, and the window function is taken as the power spectral density;

here, the acquisition of the window function corresponding to the required PSLR according to the required PSLR can be implemented through pre-set correspondences between PSLRs and window functions; the correspondences between PSLRs and window functions can be set in a correspondence table, and when a window function is required to be acquired, a required PSLR may be used as an index and then a window function corresponding to a PSLR having a same value as the required PSLR can be found in the correspondence table.

In the embodiment, the linear frequency modulation signal and its autocorrelation function can be emulated firstly, and in ideal conditions, the autocorrelation function has a PSLR of -13 dB; weighting processing can be performed on the in-band spectrum of the linear frequency modulation signal using a window function (such as Hamming window, Kaiser window, Taylor window and the like) so as to reduce the PSLR of the autocorrelation function of the linear frequency modulation signal, wherein the weight of the weighting processing, which is one of attributes of the window function, is determined by the selected window function; according to a PSLR required by SAR transmission, a window function corresponding to the required PSLR is acquired and taken as the power spectral density $P(f)$.

Step 102, a frequency-time structures function of the signal is determined according to the power spectral density;

specifically, since the power spectral density is a product of the reciprocal of the chirp rate and the coefficient of inverse proportionality, the power spectral density $P(f)$ can be represented by an expression (1):

$$P(f) = \frac{a}{\upsilon(t)} = a \cdot \frac{dt}{df} \quad (1)$$

the derivative $t'(f)$ of the frequency-time structures function $t(f)$ of the signal can be represented by an expression (2):

$$t'(f) = \frac{dt}{df} = \frac{P(f)}{a} \quad (2)$$

assuming a pulse width is $T_p$, then an expression (3) can be obtained as:

$$\frac{1}{a}\int_{-B_r/2}^{B_r/2} P(f) = \int_{-B_r/2}^{B_r/2} t'(f)df = T_p \quad (3)$$

according to the expression (3), the coefficient of inverse proportionality $\alpha$ can be represented by an expression (4):

$$a = \frac{1}{T_p}\int_{-B_r/2}^{B_r/2} P(f) \quad (4)$$

$\alpha$ is substituted into the expression (2) and $t'(f)$ is integrated to obtain an expression (5) of the frequency-time structures function of the signal:

$$t(f) = \int_0^f t'(f)df = \int_0^f \frac{P(f)}{a}df \quad (5)$$

where $\upsilon(t)$ represents a chirp rate, $t$ represents time, $f$ represents frequency, $T_p$ represents a pulse width of the signal, $B_r$ represents a bandwidth of the signal, $\alpha$ represents a coefficient of inverse proportionality.

Step 103, a time-frequency structures function of the signal is determined according to the frequency-time structures function of the signal;

specifically, discrete values $t(f)$ of the frequency-time structures function of the signal can be obtained through emulation, the frequency-time structures function includes an independent variable $f$ and a dependent variable $t$, and $f$ has a one-to-one correspondence with $t$, where $t$ represents time and $f$ represents frequency;

the independent variable and the dependent variable are reversed, then a group of discrete values can be obtained with an independent variable being $t$ and a dependent variable being $f$, and coefficients of a polynomial can be acquired from the discrete values through polynomial fitting; assuming that the polynomial has a highest order of N, and coefficients of the polynomial are $b_0, b_1, ..., b_N$ which correspond to zero order coefficient, first order coefficient, ..., Nth order coefficient of the polynomial, then a time-frequency structures function of the signal can be expressed by an expression (6):

$$f(t) = b_0 + b_1 t + b_2 t^2 + \cdots + b_N t^N \quad (6)$$

In the embodiment, the polynomial fitting can be implemented through a polynomial fitting function which is polyfit in MATLAB.

Step 104, the time-frequency structures function of the signal is integrated to obtain a phase, and discrete values of the signal using the obtained phase are calculated; and a series of digital signals are generated according to the discrete values of the signal, and digital-to-analog conversion is performed on the series of digital signals to obtain the NLFM signal;

specifically, an expression (6) of the time-frequency structures function of the signal is established according to the number of the polynomial coefficients and the expression of the time-frequency structures function is integrated;

the expression (6) is integrated to obtain an expression (7) of the phase $\phi(t)$ of the signal.

$$\phi(t) = \left( b_0 t + \frac{b_1}{2}t^2 + \frac{b_2}{3}t^3 + \cdots + \frac{b_N}{N+1}t^{N+1} \right) \quad (7)$$

the polynomial coefficients is substituted into the result of the integration of the expression of the time-frequency structures function of the signal to obtain the phase of the signal which serves as a phase value of the signal at a waveform sampling point;

the phase value is substituted into an expression of the signal $s(t)$ to obtain the discrete values of the signal, the expression (8) of the signal $s(t)$ is as follows.

$$s(t) = \text{rect}\left( \frac{t}{T_p} \right) \exp\left[ j2\pi\phi(t) \right] \quad (8)$$

where rect($\square$) is a rectangular window function,

According to a given order N of the polynomial, the discrete values of the signal can be obtained through calculation of the expression of the signal $s(t)$; a series of digital signals are generated from these discrete values of the signal, and then the series of digital signals are converted to analog signals and thus form NLFM signals satisfying PSLR. In the embodiment of the present disclosure, a series of digital signals can be generated from these discrete values of the signal and the digital signals can be converted to analog signals using a large number of Field Programmable Gate Arrays (FPGAs) and a Digital to Analog Converters (DACs), respectively.

The present disclosure will be further described in detail below in connection to specific examples.

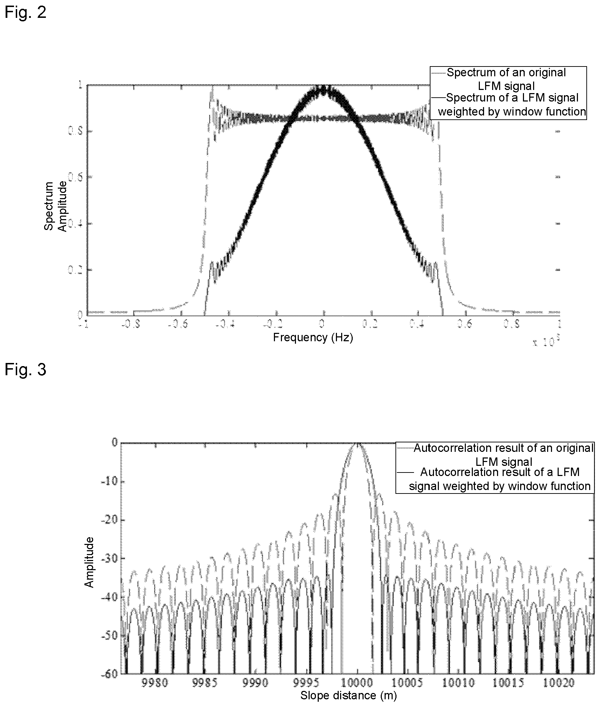

Firstly, the required PSLR is set to be -35 dB, a LFM signal and its autocorrelation function are emulated, and in the spectrum of the LFM signal, the in-band spectrum is weighted using a Taylor window (with a PSLR being -35 dB and the number of constant-level side lobes of a neighboring main lobe being 4), and an autocorrelation function of the signal weighted by the window function is calculated. Fig. 2 is a schematic diagram showing spectra of a linear frequency modulation signal and of a signal weighted by Taylor window according to an embodiment of the present disclosure; and Fig. 3 is a schematic diagram showing autocorrelation results of a linear frequency modulation signal and of a signal weighted by Taylor window according to an embodiment of the present disclosure. As can be seen, the autocorrelation result of the signal weighted by the Taylor window has a PSLR of about -35 dB, which satisfies the pre-set condition. Therefore, the above Taylor window is regarded as the power spectral density $P(f)$ of the NLFM signal.

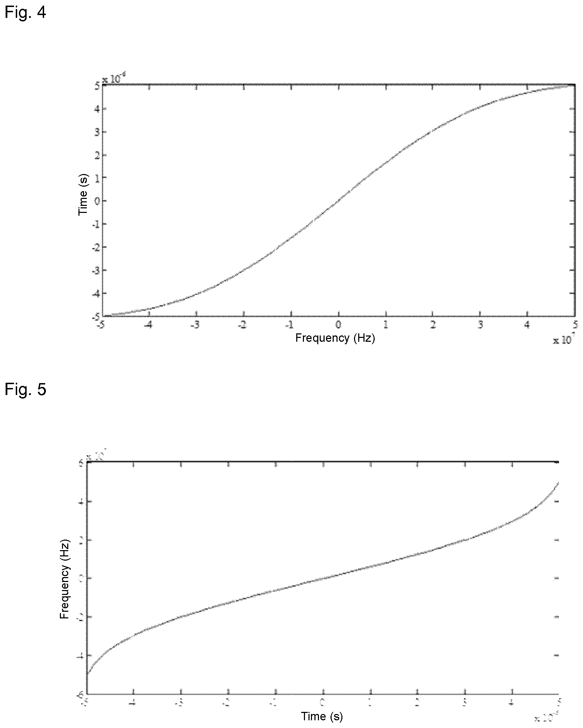

Then, the coefficient of inverse proportionality between the power spectral density and the chirp rate is obtained through the expression (4), and the frequency-time structures function of the signal is obtained through the expression (5), which is as shown in Fig. 4.

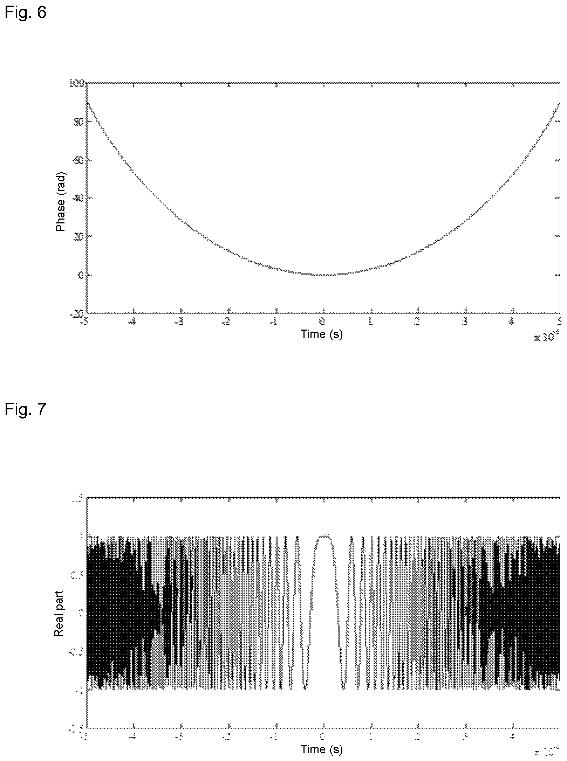

Then, the time-frequency structures function of the signal is acquired by 22nd-order polynomial fitting, which is as shown in Fig. 5. The obtained polynomial coefficients are substituted into the expression (7) to obtain phase values of the signal, which are as shown in Fig. 6, then the phase values are substituted into the expression of the signal to obtain discrete values of the signal.

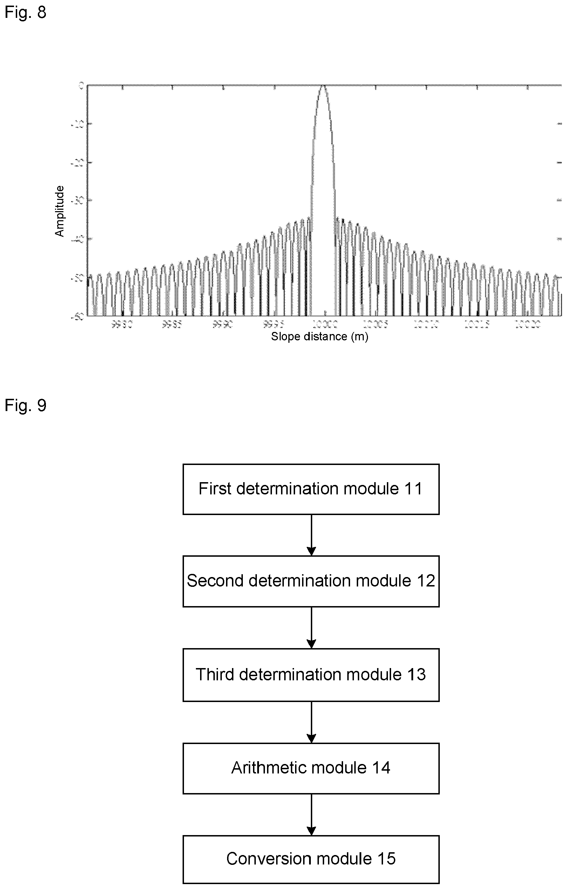

Finally, these discrete values of the signal can be converted to an analog signal using a large-scale FPGA and a DAC, the real part of the generated signal and its autocorrelation result are as shown in Figs. 7 and 8 respectively; in Fig. 8, the autocorrelation result of the signal has a PSLR of -34.31 dB.

It can be seen from the result obtained from the above processing process that, an NLFM signal can be generated accurately using the method according to the present disclosure.

A device for generating an NLFM signal according to an embodiment of the present disclosure, as shown in Fig. 9, includes a first determination module 11, a second determination module 12, a third determination module 13, an arithmetic module 14 and a conversion module 15, in which:

the first determination module 11 is configured to determine a power spectral density according to a required PSLR; specifically, the first determination module 11 is configured to acquire a window function corresponding to the required PSLR according to the required PSLR, and take the window function as the power spectral density.

Here, the acquisition of the window function corresponding to the required PSLR according to the required PSLR can be implemented through pre-set correspondences between PSLRs and window functions; the correspondences between PSLRs and window functions can be set in a correspondence table, and when a window function is required to be acquired, a required PSLR may be used as an index and then a window function corresponding to a PSLR having a same value as the required PSLR can be found in the correspondence table.

In the embodiment, the linear frequency modulation signal and its autocorrelation function can be emulated firstly, and in ideal conditions, the autocorrelation function has a PSLR of -13 dB; weighting processing can be performed on the in-band spectrum of the linear frequency modulation signal using a window function (such as Hamming window, Kaiser window, Taylor window and the like) so as to reduce the PSLR of the autocorrelation function of the linear frequency modulation signal, wherein the weight of the weighting processing, which is one of attributes of the window function, is determined by the selected window function; according to a PSLR required by SAR transmission, a window function corresponding to the required PSLR is acquired and taken as the power spectral density $P(f)$.

the second determination module 12 is configured to determine a frequency-time structures function of the signal according to the power spectral density;

specifically, since the power spectral density is a product of the reciprocal of the chirp rate and the coefficient of inverse proportionality, the power spectral density $P(f)$ can be represented by the expression (1);

the derivative of the frequency-time structures function of the signal can be represented by the expression (2);

assuming a pulse width is $T_p$, then an expression (3) can be obtained;

according to the expression (3), the coefficient of inverse proportionality $\alpha$ can be represented by the expression (4);

$\alpha$ is substituted into the expression (2) and $t'(f)$ is integrated to obtain the expression (5) of the frequency-time structures function of the signal;

where $\upsilon(t)$ represents a chirp rate, $t$ represents time, $f$ represents frequency, $T_p$ represents a pulse width of the signal, $B_r$ represents a bandwidth of the signal, $\alpha$ represents a coefficient of inverse proportionality.

the third determination module 13 is configured to determine a time-frequency structures function of the signal according to the frequency-time structures function of the signal;

specifically, discrete values $t(f)$ of the frequency-time structures function of the signal can be obtained by the third determination module 13 through emulation, the frequency-time structures function includes an independent variable $f$ and a dependent variable $t$, and $f$ has a one-to-one correspondence with $t$, where $t$ represents time and $f$ represents frequency;

the independent variable and the dependent variable are reversed, then a group of discrete values can be obtained with an independent variable being $t$ and a dependent variable being $f$, and coefficients of a polynomial can be acquired from the discrete values through polynomial fitting; assuming that the polynomial has a highest order of N, and coefficients of the polynomial are $b_0, b_1, ..., b_N$ which correspond to zero order coefficient, first order coefficient, ..., Nth order coefficient of the polynomial, then a time-frequency structures function of the signal can be expressed by the expression (6); the polynomial fitting can be implemented through a polynomial fitting function which is polyfit in MATLAB.

The arithmetic module 14 is configured to integrate the time-frequency structures function of the signal to obtain a phase, and calculate discrete values of the signal using the obtained phase;

specifically, the arithmetic module 14 establishes the expression (6) of the time-frequency structures function of the signal according to the number of the polynomial coefficients and integrates the expression of the time-frequency structures function;

the expression (6) is integrated to obtain the expression (7) of the phase $\phi(t)$ of the signal;

the polynomial coefficients is substituted into the result of the integration of the expression of the time-frequency structures function of the signal to obtain the phase of the signal as a phase value of the signal at a waveform sampling point;

the phase value is substituted into an expression of the signal $s(t)$ to obtain the discrete values of the signal, the signal $s(t)$ is represented in the expression (8), where rect( ) is a rectangular window function;

According to a given order N of the polynomial, the discrete values of the signal can be obtained through calculation of the expression of the signal $s(t)$.

The conversion module 15 is configured to generate a series of digital signals according to the discrete values of the signal, and perform digital-to-analog conversion on the series of digital signals to obtain the NLFM signal.

Specifically, the conversion module 15 is configured to generate a series of digital signals according to the discrete values of the signal, and convert the series of digital signals to analog signals and thus form NLFM signals satisfying PSLR. In the embodiment, the conversion module 15 may include a large number of FPGAs and DACs, and the series of digital signals are generated from the discrete values of the signal and the series of digital signals are then converted to analog signals using the large-scale FPGAs and the DACs, thus forming NLFM signals satisfying PSLR.

In practical applications, the first determination module 11, the second determination module 12, the third determination module 13, the arithmetic module 14 and the conversion module 15 can each be implemented by a Central Processing Unit (CPU), a Micro Processing Unit (MPU), a Digital Signal Processor (DSP) or a Field Programmable Gate Array (FPGA) of an SAR device.

## Claims

1. A method for generating a Non-Linear Frequency Modulation NLFM, signal, comprising:

   determining a power spectral density according to a required Peak Side Lobe Ratio, PSLR (101);
   determining a frequency-time structures function of a signal according to the power spectral density (102);
   determining a time-frequency structures function of the signal according to the frequency-time structures function of the signal (103);
   integrating the time-frequency structures function of the signal to obtain a phase, and calculating discrete values of the signal using the obtained phase; and
   generating a series of digital signals according to the discrete values of the signal, and performing digital-to-analog conversion on the series of digital signals to obtain a NLFM signal (104),
   wherein integrating the time-frequency structures function of the signal to obtain the phase and calculating the discrete values of the signal using the obtained phase, and generating the series of digital signals according to the discrete values of the signal and performing digital-to-analog conversion on the series of digital signals to obtain the NLFM signal (104) comprise:

   establishing an expression of the time-frequency structures function of the signal according to the number of polynomial coefficients and integrating the expression of the time-frequency structures function;
   substituting the polynomial coefficients into a result of the integration of the expression of the time-frequency structures function of the signal to obtain the phase of the signal which serves as a phase value of the signal at a waveform sampling point;
   substituting the phase value into an expression of the signal to obtain the discrete values of the signal; and
   generating the series of digital signals according to the discrete values of the signal, and performing digital-to-analog conversion on the series of digital signals to obtain the NLFM signal.

2. The method according to claim 1, wherein determining the power spectral density according to the required PSLR (101) comprises:
   acquiring a window function corresponding to the required PSLR according to the required PSLR, and taking the window function as the power spectral density.

3. The method according to claim 1, wherein determining the frequency-time structures function of the signal according to the power spectral density (102) comprises:

calculating, according to a known pulse width, a product of the power spectral density and a chirp rate to obtain a coefficient of inverse proportionality; and
substituting the coefficient of inverse proportionality into the reciprocal of the chirp rate and performing integration to determine the frequency-time structures function of the signal.

4. The method according to claim 1, wherein determining the time-frequency structures function of the signal according to the frequency-time structures function of the signal (103) comprises:

calculating discrete values of the frequency-time structures function of the signal according to the frequency-time structures function of the signal, the discrete values of the frequency-time structures function of the signal comprising an independent variable and a dependent variable; and
reversing the independent variable and the dependent variable, and acquiring polynomial coefficients by fitting to determine the time-frequency structures function of the signal.

5. A device for generating a Non-Linear Frequency Modulation, NLFM, signal, comprising a first determination module (11), a second determination module (12), a third determination module (13), an arithmetic module (14) and a conversion module (15), wherein
the first determination module (11) is configured to determine a power spectral density according to a required Peak Side Lobe Ratio, PSLR;
the second determination module (12) is configured to determine a frequency-time structures function of a signal according to the power spectral density;
the third determination module (13) is configured to determine a time-frequency structures function of the signal according to the frequency-time structures function of the signal;
the arithmetic module (14) is configured to integrate the time-frequency structures function of the signal to obtain a phase, and calculate discrete values of the signal using the obtained phase; and
the conversion module (15) is configured to generate a series of digital signals according to the discrete values of the signal, and perform digital-to-analog conversion on the series of digital signals to obtain a NLFM signal,
wherein the arithmetic module (14) is specifically configured to:

establish an expression of the time-frequency structures function of the signal according to the number of polynomial coefficients and integrate the expression of the time-frequency structures function;
substitute the polynomial coefficients into a result of the integration of the expression of the time-frequency structures function of the signal to obtain the phase of the signal which serves as a phase value of the signal at a waveform sampling point;
substitute the phase value into an expression of the signal to obtain the discrete values of the signal; and
generate the series of digital signals according to the discrete values of the signal, and perform digital-to-analog conversion on the series of digital signals to obtain the NLFM signal.

6. The device according to claim 5, wherein the first determination module (11) is specifically configured to acquire a window function corresponding to the required PSLR according to the required PSLR, and take the window function as the power spectral density.

7. The device according to claim 5, wherein the second determination module (12) is specifically configured to:
calculate, according to a known pulse width, a product of the power spectral density and a chirp rate to obtain a coefficient of inverse proportionality, and substitute the coefficient of inverse proportionality into the reciprocal of the chirp rate and perform integration to determine the frequency-time structures function of the signal.

8. The device according to claim 5, wherein the third determination module (13) is specifically configured to:

calculate discrete values of the frequency-time structures function of the signal according to the frequency-time structures function of the signal, the discrete values of the frequency-time structures function of the signal comprising an independent variable and a dependent variable; and
reverse the independent variable and the dependent variable, and acquire polynomial coefficients by fitting to determine the time-frequency structures function of the signal.

**Patentansprüche**

1. Verfahren zum Generieren eines NLFM-/Nichtlineare-Frequenzmodulation-Signals mit nichtlinearer Frequenzmodulation, umfassend:

   Bestimmen einer Leistungsspektraldichte gemäß einem erforderlichen Spitze-Nebenkeulen-Verhältnis PSLR (101);
   Bestimmen einer Frequenz-Zeit-Strukturfunktion eines Signals gemäß der Leistungsspektraldichte (102);
   Bestimmen einer Zeit-Frequenz-Strukturfunktion des Signals gemäß der Frequenz-Zeit-Strukturfunktion des Signals (103);
   Integrieren der Zeit-Frequenz-Strukturfunktion des Signals, um eine Phase zu erhalten, und Berechnen diskreter Werte des Signals unter Verwendung der erhaltenen Phase; und
   Generieren einer Reihe von digitalen Signalen gemäß den diskreten Werten des Signals, und Durchführen einer Digital-analog-Wandlung an der Reihe von digitalen Signalen, um ein NLFM-Signal (104) zu erhalten,
   wobei das Integrieren der Zeit-Frequenz-Strukturfunktion des Signals, um die Phase zu erhalten, und Berechnen der diskreten Werte des Signals unter Verwendung der Phase und das Generieren der Reihe von digitalen Signalen gemäß den diskreten Werten des Signals und Durchführen der Digital-analog-Wandlung an der Reihe von digitalen Signalen, um das NLFM-Signal (104) zu erhalten, umfassen:

      Ermitteln eines Ausdrucks für die Zeit-Frequenz-Strukturfunktion des Signals gemäß der Anzahl von Polynomkoeffizienten und Integrieren des Ausdrucks für die Zeit-Frequenz-Strukturfunktion;
      Einsetzen der Polynomkoeffizienten in ein Ergebnis der Integration des Ausdrucks für die Zeit-Frequenz-Strukturfunktion des Signals, um die Phase des Signals zu erhalten, die als Phasenwert des Signals an einem Wellenform-Abtastpunkt dient;
      Einsetzen des Phasenwerts in einen Ausdruck für das Signal, um die diskreten Werte des Signals zu erhalten; und
      Generieren der Reihe von digitalen Signalen gemäß den diskreten Werten des Signals, und Durchführen einer Digital-analog-Wandlung an der Reihe von digitalen Signalen, um das NLFM-Signal zu erhalten.

2. Verfahren nach Anspruch 1, wobei das Bestimmen der Leistungsspektraldichte gemäß dem erforderlichen PSLR (101) umfasst:
   Erfassen einer dem erforderlichen PSLR entsprechenden Fensterfunktion gemäß dem erforderlichen PSLR und Verwenden der Fensterfunktion als die Leistungsspektraldichte.

3. Verfahren nach Anspruch 1, wobei das Bestimmen der Frequenz-Zeit-Strukturfunktion des Signals gemäß der Leistungsspektraldichte (102) umfasst:

   Berechnen, gemäß einer bekannten Pulsbreite, eines Produkts der Leistungsspektraldichte und einer Chirp-Rate, um einen Koeffizienten inverser Proportionalität zu erhalten; und
   Einsetzen des Koeffizienten inverser Proportionalität in den Kehrwert der Chirp-Rate und Durchführen einer Integration, um die Frequenz-Zeit-Strukturfunktion des Signals zu bestimmen.

4. Verfahren nach Anspruch 1, wobei das Bestimmen der Zeit-Frequenz-Strukturfunktion des Signals gemäß der Frequenz-Zeit-Strukturfunktion des Signals (103) umfasst:

   Berechnen diskreter Werte der Frequenz-Zeit-Strukturfunktion des Signals gemäß der Frequenz-Zeit-Strukturfunktion des Signals, wobei die diskreten Werte der Frequenz-Zeit-Strukturfunktion des Signals eine unabhängige Variable und eine abhängige Variable umfassen; und
   Vertauschen der unabhängigen Variable und der abhängigen Variable und Erfassen von Polynomkoeffizienten durch Anpassen, um die Zeit-Frequenz-Strukturfunktion des Signals zu bestimmen.

5. Vorrichtung zum Generieren eines NLFM-/Nichtlineare-Frequenzmodulation-Signals, umfassend ein erstes Bestimmungsmodul (11), ein zweites Bestimmungsmodul (12), ein drittes Bestimmungsmodul (13), ein Arithmetikmodul (14) und ein Wandlungsmodul (15), wobei
   das erste Bestimmungsmodul (11) dazu eingerichtet ist, eine Leistungsspektraldichte gemäß einem erforderlichen Spitze-Nebenkeulen-Verhältnis, PSLR, zu bestimmen;
   das zweite Bestimmungsmodul (12) dazu eingerichtet ist, eine Frequenz-Zeit-Strukturfunktion eines Signals gemäß der Leistungsspektraldichte zu bestimmen;

das dritte Bestimmungsmodul (13) dazu eingerichtet ist, eine Zeit-Frequenz-Strukturfunktion des Signals gemäß der Frequenz-Zeit-Strukturfunktion des Signals zu bestimmen;

das Arithmetikmodul (14) dazu eingerichtet ist, die Zeit-Frequenz-Strukturfunktion des Signals zu integrieren, um eine Phase zu erhalten, und diskrete Werte des Signals unter Verwendung der erhaltenen Phase zu berechnen; und

das Wandlungsmodul (15) dazu eingerichtet ist, eine Reihe von digitalen Signalen gemäß den diskreten Werten des Signals zu generieren und eine Digital-analog-Wandlung an der Reihe von digitalen Signalen durchzuführen, um ein NLFM-Signal zu erhalten,

wobei das Arithmetikmodul (14) im Speziellen dazu eingerichtet ist:

einen Ausdruck für die Zeit-Frequenz-Strukturfunktion des Signals gemäß der Anzahl von Polynomkoeffizienten zu ermitteln und den Ausdruck für die Zeit-Frequenz-Strukturfunktion zu integrieren;

die Polynomkoeffizienten in ein Ergebnis der Integration des Ausdrucks für die Zeit-Frequenz-Strukturfunktion des Signals einzusetzen, um die Phase des Signals zu erhalten, die als Phasenwert des Signals an einem Wellenform-Abtastpunkt dient;

den Phasenwert in einen Ausdruck für das Signal einzusetzen, um die diskreten Werte des Signals zu erhalten; und

die Reihe von digitalen Signalen gemäß den diskreten Werten des Signals zu generieren und eine Digital-analog-Wandlung an der Reihe von digitalen Signalen durchzuführen, um das NLFM-Signal zu erhalten.

6. Vorrichtung nach Anspruch 5, wobei das erste Bestimmungsmodul (11) im Speziellen dazu eingerichtet ist, eine dem erforderlichen PSLR entsprechende Fensterfunktion gemäß dem erforderlichen PSLR zu erfassen und die Fensterfunktion als die Leistungsspektraldichte zu verwenden.

7. Vorrichtung nach Anspruch 5, wobei das zweite Bestimmungsmodul (12) im Speziellen dazu eingerichtet ist, gemäß einer bekannten Pulsbreite ein Produkt der Leistungsspektraldichte und einer Chirp-Rate zu berechnen, um einen Koeffizienten inverser Proportionalität zu erhalten, und den Koeffizienten inverser Proportionalität in den Kehrwert der Chirp-Rate einzusetzen und eine Integration durchzuführen, um die Frequenz-Zeit-Strukturfunktion des Signals zu bestimmen.

8. Vorrichtung nach Anspruch 5, wobei das dritte Bestimmungsmodul (13) im Speziellen dazu eingerichtet ist:

diskrete Werte der Frequenz-Zeit-Strukturfunktion des Signals gemäß der Frequenz-Zeit-Strukturfunktion des Signals zu berechnen, wobei die diskreten Werte der Frequenz-Zeit-Strukturfunktion des Signals eine unabhängige Variable und eine abhängige Variable umfassen; und

die unabhängige Variable und die abhängige Variable zu vertauschen und Polynomkoeffizienten durch Anpassen zu erfassen, um die Zeit-Frequenz-Strukturfunktion des Signals zu bestimmen.

## Revendications

1. Procédé de génération d'un signal de modulation de fréquence non linéaire NLFM, soit Non-Linear Frequency Modulation, comprenant :

la détermination d'une densité spectrale de puissance conformément à un ratio de lobe côté crête PSLR (101), soit Peak Side Lobe Ratio, requis ;

la détermination d'une fonction de structures fréquence-temps d'un signal conformément à la densité spectrale de puissance (102) ;

la détermination d'une fonction de structures temps-fréquence du signal conformément à la fonction de structures fréquence-temps du signal (103) ;

l'intégration de la fonction de structures temps-fréquence du signal pour obtenir une phase, et le calcul de valeurs discrètes du signal en utilisant la phase obtenue ; et

la génération d'une série de signaux numériques conformément aux valeurs discrètes du signal, et la mise en oeuvre d'une conversion numérique-analogique sur la série de signaux numériques pour obtenir un signal NLFM (104),

dans lequel l'intégration de la fonction de structures temps-fréquence du signal pour obtenir la phase et le calcul des valeurs discrètes du signal en utilisant la phase obtenue, ainsi que la génération de la série de signaux numériques conformément aux valeurs discrètes du signal et la mise en oeuvre d'une conversion numérique-analogique sur la série de signaux numériques pour obtenir le signal NLFM (104), comprennent :

**EP 3 144 701 B1**

l'établissement d'une expression de la fonction de structures temps-fréquence du signal conformément au nombre de coefficients polynomiaux et l'intégration de l'expression de la fonction de structures temps-fréquence ;

la substitution des coefficients polynomiaux dans un résultat de l'intégration de l'expression de la fonction de structures temps-fréquence du signal pour obtenir la phase du signal qui sert de valeur de phase du signal à un point d'échantillonnage de forme d'onde ;

la substitution de la valeur de phase dans une expression du signal pour obtenir les valeurs discrètes du signal ; et

la génération de la série de signaux numériques conformément aux valeurs discrètes du signal, et la mise en oeuvre d'une conversion numérique-analogique sur la série de signaux numériques pour obtenir le signal NLFM.

2. Procédé selon la revendication 1, dans lequel la détermination de la densité spectrale de puissance conformément au PSLR requis (101) comprend :

l'acquisition d'une fonction de fenêtre correspondant au PSLR requis conformément au PSLR requis, et la saisie de la fonction de fenêtre comme densité spectrale de puissance.

3. Procédé selon la revendication 1, dans lequel la détermination de la fonction de structures fréquence-temps du signal conformément à la densité spectrale de puissance (102) comprend :

le calcul, conformément à une largeur d'impulsion connue, d'un produit de la densité spectrale de puissance et d'un taux de compression d'impulsions pour obtenir un coefficient de proportionnalité inverse ; et

la substitution du coefficient de proportionnalité inverse en réciproque du taux de compression d'impulsions et la mise en oeuvre d'une intégration pour déterminer la fonction de structures fréquence-temps du signal.

4. Procédé selon la revendication 1, dans lequel la détermination de la fonction de structures temps-fréquence du signal conformément à la fonction de structures fréquence-temps du signal (103) comprend :

le calcul de valeurs discrètes de la fonction de structures fréquence-temps du signal conformément à la fonction de structures fréquence-temps du signal, les valeurs discrètes de la fonction de structures fréquence-temps du signal comprenant une variable indépendante et une variable dépendante ; et

l'inversion de la variable indépendante et de la variable dépendante, et l'acquisition de coefficients polynomiaux par ajustement de manière à déterminer la fonction de structures temps-fréquence du signal.

5. Dispositif de génération d'un signal de modulation de fréquence non linéaire NLFM, comprenant un premier module de détermination (11), un deuxième module de détermination (12), un troisième module de détermination (13), un module arithmétique (14) et un module de conversion (15), dans lequel

le premier module de détermination (11) est configuré pour déterminer une densité spectrale de puissance conformément à un ratio PSLR requis ;

le deuxième module de détermination (12) est configuré pour déterminer une fonction de structures fréquence-temps d'un signal conformément à la densité spectrale de puissance ;

le troisième module de détermination (13) est configuré pour déterminer une fonction de structures temps-fréquence du signal conformément à la fonction de structures fréquence-temps du signal ;

le module arithmétique (14) est configuré pour intégrer la fonction de structures temps-fréquence du signal pour obtenir une phase, et pour calculer des valeurs discrètes du signal en utilisant la phase obtenue ; et

le module de conversion (15) est configuré pour générer une série de signaux numériques conformément aux valeurs discrètes du signal, et pour mettre en oeuvre une conversion numérique-analogique sur la série de signaux numériques pour obtenir un signal NLFM,

dans lequel le module arithmétique (14) est spécifiquement configuré pour :

établir une expression de la fonction de structures temps-fréquence du signal conformément au nombre de coefficients polynomiaux et intégrer l'expression de la fonction de structures temps-fréquence ;

substituer les coefficients polynomiaux dans un résultat de l'intégration de l'expression de la fonction de structures temps-fréquence du signal pour obtenir la phase du signal qui sert de valeur de phase du signal à un point d'échantillonnage de forme d'onde ;

substituer la valeur de phase dans une expression du signal pour obtenir les valeurs discrètes du signal ; et

générer la série de signaux numériques conformément aux valeurs discrètes du signal, et mettre en oeuvre une conversion numérique-analogique sur la série de signaux numériques pour obtenir le signal NLFM.

**6.** Dispositif selon la revendication 5, dans lequel le premier module de détermination (11) est spécifiquement configuré pour acquérir une fonction de fenêtre correspondant au PSLR requis conformément au PSLR requis, et pour saisir la fonction de fenêtre comme densité spectrale de puissance.

**7.** Dispositif selon la revendication 5, dans lequel le deuxième module de détermination (12) est spécifiquement configuré pour :
calculer, conformément à une largeur d'impulsion connue, un produit de la densité spectrale de puissance et d'un taux de compression d'impulsions pour obtenir un coefficient de proportionnalité inverse, et substituer le coefficient de proportionnalité inverse en réciproque du taux de compression d'impulsions et mettre en oeuvre une intégration pour déterminer la fonction de structures fréquence-temps du signal.

**8.** Dispositif selon la revendication 5, dans lequel le troisième module de détermination (13) est spécifiquement configuré pour :

calculer des valeurs discrètes de la fonction de structures fréquence-temps du signal conformément à la fonction de structures fréquence-temps du signal, les valeurs discrètes de la fonction de structures fréquence-temps du signal comprenant une variable indépendante et une variable dépendante ; et
inverser la variable indépendante et la variable dépendante, et acquérir des coefficients polynomiaux par ajustement de manière à déterminer la fonction de structures temps-fréquence du signal.

Fig. 1

```
                                                                    ┌101
┌─────────────────────────────────────────────────────┐  /
│   A power spectral density is determined according to │ /
│                a required PSLR                        │
└─────────────────────────────────────────────────────┘
                          │
                          ▼
                                                                    ┌102
┌─────────────────────────────────────────────────────┐  /
│   A frequency-time structures function of a signal is │ /
│    determined according to the power spectral density │
└─────────────────────────────────────────────────────┘
                          │
                          ▼
                                                                    ┌103
┌─────────────────────────────────────────────────────┐  /
│   A time-frequency structures function of the signal is│ /
│         determined according to the frequency-time    │
│             structures function of the signal         │
└─────────────────────────────────────────────────────┘
                          │
                          ▼
┌─────────────────────────────────────────────────────┐
│ The time-frequency structures function of the signal is│
│  integrated to obtain a phase, and discrete values of │
│  the signal using the obtained phase are calculated;  │      ┌104
│      and a series of digital signals are generated    │  /
│    according to the discrete values of the signal, and│ /
│     digital-to-analog conversion is performed on the  │
│    series of digital signals to obtain a NLFM signal   │
└─────────────────────────────────────────────────────┘
```

Fig. 2

Fig. 3

Fig. 4

Fig. 5

Fig. 6

Fig. 7

Fig. 8

Slope distance (m)

Fig. 9

First determination module 11

Second determination module 12

Third determination module 13

Arithmetic module 14

Conversion module 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 7880672 B1, Doerry Armin W

### Non-patent literature cited in the description

• Sidelobe reduction with nonlinear frequency modulated waveforms. **BOUKEFFA S et al.** Signal Processing and Its Appications (CSPA), 2011 IEEE 7th International Colloquium On. IEEE, 04 March 2011, 399-403

• Sidelobe reduction in pulse-compression radar using the stationary phase technique: An extended comparative study. **VIZITIU IULIAN-CONSTANTIN et al.** 2014 International Conference on Optimization of Electrical and Electronic Equipment (OPTIM). IEEE, 22 May 2014, 898-901

• Suppression of GPR range sidelobes based on NLFM signal. **MARIUSZ ZYCH.** Radar Symposium (IRS), 2012 13th International. IEEE, 23 May 2012, 454-458